(19) Europäisches Patentamt
European Patent Office
Office européen des brevets

(11) **EP 1 759 508 B1**

(12) **EUROPÄISCHE PATENTSCHRIFT**

(45) Veröffentlichungstag und Bekanntmachung des Hinweises auf die Patenterteilung:
**19.07.2017 Patentblatt 2017/29**

(21) Anmeldenummer: **05737791.3**

(22) Anmeldetag: **06.05.2005**

(51) Int Cl.:
***H04L 27/36*** *(2006.01)*

(86) Internationale Anmeldenummer:
**PCT/EP2005/004922**

(87) Internationale Veröffentlichungsnummer:
**WO 2005/125143 (29.12.2005 Gazette 2005/52)**

(54) **VERFAHREN UND VORRICHTUNG ZUR GLEICHZEITIGEN KOMPENSATION VON SIGNALFEHLERN IN IQ-MODULATOREN**

METHOD AND DEVICE FOR THE SIMULTANEOUS COMPENSATION OF SIGNAL ERRORS IN IQ-MODULATORS

PROCEDE ET DISPOSITIF DE COMPENSATION SIMULTANEE D'ERREURS DE SIGNAL DANS DES MODULATEURS DE IQ

(84) Benannte Vertragsstaaten:
**DE FR GB**

(30) Priorität: **21.06.2004 DE 102004029932**

(43) Veröffentlichungstag der Anmeldung:
**07.03.2007 Patentblatt 2007/10**

(73) Patentinhaber: **Rohde & Schwarz GmbH & Co. KG**
**81671 München (DE)**

(72) Erfinder: **DANZ, Joachim**
**85579 Neubiberg (DE)**

(74) Vertreter: **Körfer, Thomas**
**Mitscherlich PartmbB**
**Patent- und Rechtsanwälte**
**Postfach 33 06 09**
**80066 München (DE)**

(56) Entgegenhaltungen:
**US-B1- 6 421 397    US-B1- 6 570 933**

• **LOHTIA A ET AL: "An adaptive digital technique for compensating for analog quadrature modulator/demodulator impairments" COMMUNICATIONS, COMPUTERS AND SIGNAL PROCESSING, 1993., IEEE PACIFIC RIM CONFERENCE ON VICTORIA, BC, CANADA 19-21 MAY 1993, NEW YORK, NY, USA, IEEE, Bd. 2, 19. Mai 1993 (1993-05-19), Seiten 447-450, XP010141761 ISBN: 0-7803-0971-5**
• **HAYKIN S: "Adaptive Filter Theory, Second Edition", 19910101; 19910000, 1 January 1991 (1991-01-01), XP002467122,**

EP 1 759 508 B1

**Beschreibung**

Die Erfindung betrifft ein Verfahren zur gleichzeitigen Kompensation von Signalfehlern in IQ-Modulatoren.

IQ-Modulatoren werden in modernen Datenübertragungssystemen zur Modulation von unmodulierten Hochfrequenzträgern eingesetzt. Gegenüber traditionellen Modulationsverfahren, die ein reellwertiges Bandpaßsignal erzeugen, ist mit IQ-Modulatoren prinzipbedingt ein komplexes Bandpaßsignal im Zwischenfrequenz- oder Hochfrequenzbereich generierbar. Der Erzeugung beliebiger Vektoren im Zwischenfrequenz- oder Hochfrequenzbereich ermöglicht somit gegenüber einem reellwertigen Modulationsverfahren eine bessere Ausnutzung der verfügbaren Bandbreite.

In der Praxis ist die Erzeugung eines beliebigen Vektors in der komplexen Zwischenfrequenz- oder Hochfrequenz-Ebene mit einer für die Datenübertragung erforderlichen Genauigkeit insbesondere bei analog realisierten IQ-Modulatoren problematisch. Aufgrund der analogen Schaltungsrealisierung der IQ-Modulatoren kommt es zu unerwünschten statischen Signalfehlern, die sich den einzelnen Eingangssignalen des IQ-Modulators statisch überlagern und dauerhaft zu einem fehlerhaften komplexen Signal am Ausgang des IQ-Modulators führen, was sich in einer Verschiebung des Vektors des komplexen Ausgangssignals im komplexen Zustandsdiagramm bemerkbar macht.

Im wesentlichen können folgende statische Signalfehler aufgeführt werden:

- Eingangs-Offsetfehler: bei nicht angesteuertem, Inphase- und Quadraturphase-Kanal weisen die Basisbandsignale des Inphase- und Quadraturphase-Kanals einen von Null verschiedenen Wert auf und bedingen eine nicht optimale Dämpfung des jeweiligen Trägersignals,
- Hochfrequenz-Übersprechen: das Trägersignal spricht über die beiden Multiplizierglieder des IQ-Modulators auf das Bandpaßsignal am Ausgang des IQ-Modulators über,
- nichtlineare Modulation: aufgrund von nicht zu vermeidenden Nichtlinearitäten - insbesondere Nichtlinearitäts-Unterschiede - der beiden Multiplizierglieder des IQ-Modulators kommt es zu unterschiedlichen Amplituden in den Seitenbändern des komplexen Basisbandsignals,
- Trägerrest: aufgrund fehlerhaft dimensionierter Bandpaßfilter am Ausgang des IQ-Modulators ist ein Seitenband des Bandpaßsignals für eine Einseitenbandübertragung nicht vollständig gedämpft,
- Verstärkungsfehler im Basisband: die Empfindlichkeit der Verstärkungsglieder im Inphase- und Quadraturphase-Eingang des IQ-Modulators ist fehlerhaft eingestellt bzw. kalibriert und vor allem asymmetrisch ausgelegt,
- Verstärkungsfehler in den Multiplizierglieder: die Empfindlichkeit der beiden Multiplizierglieder des IQ-Modulator ist fehlerhaft eingestellt bzw. kalibriert und vor allem asymmetrisch ausgelegt,
- Ouadraturfehler: aufgrund von Phasenverzerrungen der beiden Trägersignale des Inphase- und des Quadraturphasesignals sind die Ausgangssignale der beiden Multiplizierglieder des IQ-Modulators nicht orthogonal zueinander,
- Phasenfehler: aufgrund beispielsweise fehlerhafter Trägerrückgewinnung oder Taktsynchronisierung weist das Inphase- und das Quadraturphasesignal den gleichen Phasenfehler auf.

Da mehrere dieser genannten statischen Signalfehler in ihrer Auswirkung auf das Bandpaßsignal am Ausgang des IQ-Modulator identisch sind und sich linear überlagern und somit meßtechnisch nicht gesondert erfaßt werden können, ist eine Zusammenfassung von statischen Signalfehlern mit gleicher Wirkung auf das Bandpaßsignal in Signalfehlertypen sinnvoll. Prinzipiell ergeben sich drei Typen von statischen Signalfehlern:

- Signalfehler mit additiver Wirkung auf das Bandpaß Signal: Eingangs-Offsetfehler, Hochfrequenz-Übersprechen, nichtlineare Modulation, Trägerrest,
- Signalfehler mit multiplikative Wirkung auf das Bandpaßsignal: Verstärkungsfehler im Basisband, Ver stärkungsfehler in den Multiplizierglieder,
- Signalfehler mit Wirkung auf die Phase des Bandpaßsignals: Quadraturfehler, Phasenfehler.

Alle diese aufgeführten statischen Signalfehler führen im Empfänger des Datenübertragungssystems zu einer fehlerhaften Interpretation des Übertragungssignals. Ist es nicht möglich, diese die Qualität der Datenübertragung reduzierenden Signalfehler in ihrer Wirkung zu minimieren, so ist einzig eine Beschränkung der Datenübertragungsbandbreite zielführend. Da diese statischen Signalfehler auf schaltungstechnischen Wege in einem wirtschaftlich sinnvollen Aufwand kaum zu beseitigen sind und eine Beschränkung der Datenübertragungsbandbreite im allgemeinen nicht akzeptabel ist, kann nur eine Kompensation derartiger Signalfehler mit Hilfe von Kompensations- oder Korrekturennetzwerken angestrebt werden.

In der DE 199 34 215 C1 wird beispielhaft eine Anordnung zur Kompensation von statischen Signalfehlern, die in IQ-Modulatoren erzeugt werden, vorgestellt. Entsprechend der drei Typen von Signalfehlern werden im Inphase- und Quadraturphasekanal jeweils ein Addier- und ein Multiplizierglied zur Kompensation der Signalfehler mit additiver und multiplikative Wirkung integriert. Zur Beseitigung der Signalfehler mit Wirkung auf die Phase des Bandpaßsignals ist ein zusätzlicher Ansteuerungseingang am Phasenschieber zur Realisierung zueinander orthogonaler Trägersignale vorgesehen. Sowohl die beiden Addier- und Multiplizierglieder als auch der Ansteuereingang am Phasenschieber werden mit entsprechenden Korrekturwerten zur Kompensation der einzelnen Signalfehler über einen Regler angesteuert. Eine Rekonstruktion des Inphase- und Quadraturphasesignals aus dem Bandpaßsignal am Ausgang des IQ-Modulators über einen äquivalenten IQ-Demodulator und eine geeignete Implementierung von Regelalgorithmen innerhalb des Reglers ermöglicht die Kompensation von statischen Signalfehlern.

Eine optimale Kompensation der einzelnen Signalfehler erfordert die absolute Messung jedes einzelnen Signalfehlers oder alternativ die Messung bzw. Ermittelung jedes einzelnen effektiven Signalfehlers als Differenz zwischen dem einzelnen Signalfehler und dem dazugehörigen Korrektursignal. Dies ist bei der Anordnung der DE 199 34 215 C1 nicht möglich, da dem Regler als Istwert-Signale die im IQ-Demodulator rückgewonnenen mit Signalfehlern behafteten Inphase- und Quadraturphasesignale zugeführt werden. Eine Bestimmung der einzelnen Signalfehler aus den rückgewonnenen Inphase- und Quadraturphasesignalen kann der Druckschrift nicht entnommen werden. Zusätzlich erfordert eine optimale Kompensation von einzelnen Signalfehlern eine für jeden einzelnen Signalfehler entkoppelte Generierung des zugehörigen Korrektursignals auf der Basis der Differenz zwischen Signalfehler und Korrektursignal. Auch dies kann der Druckschrift DE 199 34 215 C1 nicht entnommen werden, da keine für jeden einzelnen Signalfehler entkoppelte Ausregelung des jeweiligen effektiven Signalfehlers als voneinander entkoppelte Ausregelung der Differenz zwischen dem einzelnen Signalfehler und dem jeweils zugehörigen Korrektursignal in der Beschreibung des Reglers in der Druckschrift offenbart ist.

Die Druckschrift Lohtia, A. et al.: "An adaptive digital technique for compensating for analog quadrature modulator/demodulator impairments" COMMUNICATIONS, COMPUTERS AND SIGNAL PROCESSING; 1993; IEEE PACIFIC RIM CONFERENCE ON VICTORIA, BC, CANADA 19-21 MAY 1993, NEW YORK, NY, USA, IEEE, Bd. 2, 19. Mai 1993 (1993-05-19), Seiten 447-450, ISBN: 0-7803-0971-5 offenbart ein Verfahren zur Kompensation von Signalfehlern - Verstärkungsdifferenzen, Offset-Differenzen und Quadraturfehler zwischen Inphase- und Quadratur-Kanal - in einem analogen Quadratur-Modulator bzw. analogen Quadratur-Demodulator. Die einzelnen Signalfehler ergeben sich durch numerische Lösung eines Gleichungssystems mit fünf Unbekannten. Hierzu wird der analoge Quadratur-Modulator jeweils mit fünf verschiedenen Sätzen von Quadratur- und Inphase-Signalen beaufschlagt und das zugehörige HF-Signal am Ausgang des analogen Quadratur-Modulators gemessen. Analog wird der analoge Quadratur-Demodulator jeweils mit fünf verschiedenen HF-Signalen am Eingang des analogen Quadratur-Demodulators beaufschlagt und die zugehörigen Inphase- und Quadratur-Signale am Ausgang des analogen Quadratur-Demodulators gemessen. Die einzelnen numerisch berechneten Signalfehler werden im analogen Quadratur-Modulator den Inphase- und Quadratur-Signalen als Vorverzerrungssignale zur Kompensation der einzelnen realen Signalfehler überlagert. Analog werden die einzelnen numerisch berechneten Signalfehler im analogen Quadratur-Demodulator den Inphase- und Quadratur-Signalen als Nachverzerrungssignale zur Kompensation der einzelnen realen Signalfehler überlagert. Die einzelnen Signalfehler werden einmalig berechnet und als Korrekturgrößen zur Kompensation der realen Signalfehler in der Vorverzerrung bzw. nach Verzerrung im laufenden Betrieb benutzt. Ändern sich die realen Signalfehler - beispielsweise bei Temperaturänderungen -, so ist eine Aktualisierung der Korrekturgrößen zur Kompensation der realen veränderten Signalfehler erforderlich. In einem Updating-Prozess werden die einzelnen geänderten Signalfehler von neuem ermittelt. Hierbei wird der analoge Quadratur-Modulator bzw. der analoge Quadratur-Demodulator mit den jeweiligen Signalgrößen an seinem/n Eingang/Eingängen beaufschlagt und die zugehörigen Signalgrößen an seinem/n Ausgang/Ausgängen ohne Zuschaltung der Korrektursignale wie bei der erstmaligen Durchführung der Kalibrierung gemessen.

Der Erfindung liegt daher die Aufgabe zugrunde, ein Verfahren und eine Vorrichtung zur gleichzeitigen Kompensation aller in einem IQ-Modulator erzeugten Signalfehler zu schaffen, wobei im Hinblick auf eine optimierte Kompensation jedes einzelnen Signalfehlers die Abweichung zwischen Signalfehler und dazugehörigem Korrektursignal entkoppelt voneinander ermittelt und minimiert werden soll.

Die Aufgabe wird durch ein Verfahren nach Anspruch 1 und eine Vorrichtung nach Anspruch 13 gelöst. Vorteilhafte Ausgestaltungen der Erfindung sind in den jeweils abhängigen Ansprüchen angegeben.

Bei dem erfindungsgemäßen Verfahren nach Anspruch 1 und der erfindungsgemäßen Vorrichtung nach Anspruch 13 wird für jeden der Signalfehler der jeweilige Signalfehler als Differenz zwischen dem jeweiligen Signalfehler und dem jeweils dazugehörigen Korrektursignal aus einem komplexen Basisband-Modell ermittelt, das für den IQ-Modulator und eine vorgeschaltete Korrekturschaltung mit den Einprägungen der ermittelten Korrektursignale erzeugt wird. Gehen in das komplexe Basisband-Modell des IQ-Modulators und der vorgeschalteten Korrekturschaltung eine der Anzahl von Unbekannten entsprechende Anzahl von Signalwerten der beiden eingeprägten Modulationssignale und des davon abhängigen gemessenen Bandpaßsignals am Ausgang des IQ-Modulators ein, so können durch Lösung dieses somit entstandenen Gleichungssystems alle Unbekannten und alle darin enthaltenen Signalfehler ermittelt werden.

Da das Gleichungssystem des komplexen Basisband-Modells nichtlineare Gleichungen enthält, ist ein numerischer Lösungsweg anzustreben. Numerische Iterationsverfahren wie das Newton-Verfahren oder das Brodyn-Verfahren eignen sich hierbei besonders.

Um den Signalfehler jeweils zu minimieren, ist in einem zweiten Schritt des erfindungsgemäßen Verfahrens ein Gradienten-Verfahren anzuwenden, bei dem der jeweilige Signalfehler bis auf einem vorgegebenen Schwellwert iterativ minimiert wird.

Bei der Modellierung des komplexen Basisband-Modells des IQ-Modulators und der vorgeschalteten Korrekturschaltung ist zu berücksichtigen, daß es mehrere Signalfehler gibt, welche die gleiche Wirkung auf die einzelnen Eingangssignale des IQ-Modulators haben und deshalb meßtechnisch nicht zu trennen sind. Folglich sind im Basisband-Modell nur Signalfehler zu modellieren, die sich jeweils additiv oder multiplikativ dem Inphase- oder Quadraturphasesignal überlagern oder die die Phase der beiden Trägersignale des IQ-Modulators beeinflussen.

Eine Ausführungsform des erfindungsgemäßen Verfahrens und der geeigneten Vorrichtung zur gleichzeitigen Kompensation von in IQ-Modulatoren erzeugten Signalfehlern wird nachfolgend unter Bezugnahme auf die Zeichnung näher erläutert. In der Zeichnung zeigen:

Fig. 1 ein Blockschaltbild der Vorrichtung zur gleichzeitigen Kompensation von in IQ-Modulatoren erzeugten Signalfehlern,

Fig. 2 ein Blockschaltbild für ein komplexes Basis-band-Modell für den IQ-Modulator und die vorgeschaltete Korrekturschaltung,

Fig. 3 ein Flußdiagramm des erfindungsgemäßen Verfahrens zur gleichzeitigen Kompensation von in IQ-Modulatoren erzeugten Signalfehlern und

Fig. 4 ein Konstellationsdiagramm mit IQ-Startwerten für das erfindungsgemäße Verfahren zur gleichzeitigen Kompensation von in IQ-Modulatoren erzeugten Signalfehlern.

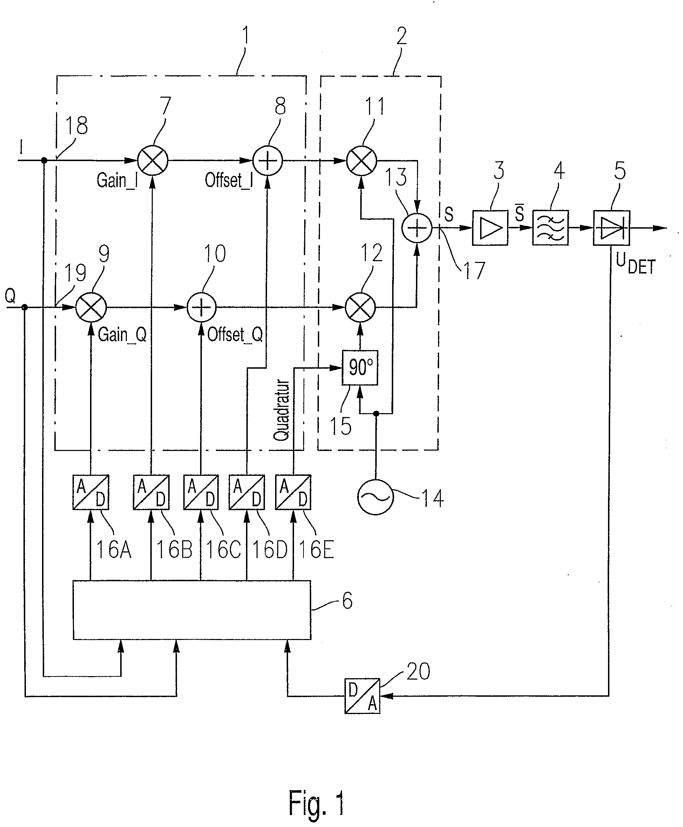

Die Vorrichtung zur gleichzeitigen Kompensation von in IQ-Modulatoren erzeugten Signalfehlern besteht entsprechend Fig. 1 aus einer Korrekturschaltung 1, einem nachgeschalteten IQ-Modulator 2, einem anschließenden Hochfrequenzverstärker 3, Bandpaßfilter 4 und Hochfrequenzdetektor 5 sowie einer Verarbeitungseinheit 6.

Der Korrekturschaltung 1 wird das Inphase-Modulationssignal I und das Quadraturphase-Modulationssignal Q zugeführt. Als Korrekturglieder sind in der Korrekturschaltung 1 ein erstes Verstärkungsglied 7 zur Verstärkung des Inphase-Modulationssignals I mit dem Korrektursignal Gain_I und ein nachfolgendes erstes Addierglied 8 zur Addition des Inphase-Modulationssignals I mit dem Korrektursignal Offset_I, ein zweites Verstärkungsglied 9 zur Verstärkung des Quadraturphase-Modulationssignal Q mit einem Korrektursignal Gain_Q und schließlich ein nachfolgendes zweites Addierglied 10 zur Addition des Quadraturphase-Modulationssignals Q mit dem Korrektursignal Offset_Q vorhanden. Schließlich enthält die Korrekturschaltung 1 auch noch das Korrektursignal Quadratur zur Phasenverschiebung der beiden zueinander orthogonalen Trägersignale Lo und Lo*.

Im IQ-Modulator 2, der der Korrekturschaltung 1 nachgeschaltete ist, wird das um die beiden Korrektursignale Gain_I und Offset_I korrigierte Inphase-Modulationssignal I einem ersten Multiplizierglied 11 zugeführt, in dem die Umsetzung des Inphase-Modulationssignals I vom Basisband über das dem ersten Multiplizierglied 11 zugeführte erste Trägersignal Lo in den Zwischenfrequenz- oder Hochfrequenz-Bandpaß-Bereich erfolgt. Analog wird das um die beiden Korrektursignale Gain_Q und Offset_Q korrigierte Quadraturphase-Modulationssignal Q einem zweiten Multiplizierglied 12 zugeführt, in dem die Umsetzung des Quadraturphase-Modulationssignals Q vom Basisband über das dem zweiten Multiplizierglied 12 zugeführte zweite Trägersignal Lo*, das bezüglich seiner Phase in Quadratur zum ersten Trägersignal Lo steht, in den Zwischenfrequenz- oder Hochfrequenzbereich-Bandpaß-Bereich umgesetzt. Die beiden in den Zwischenfrequenz- oder Hochfrequenz-Bandpaß-Bereich umgesetzten Inphase- und Quadraturphase-Modulationssignale I und Q werden schließlich in einem Addierer 13 des IQ-Modulator 2 zum Ausgangssignal S des IQ-Modulator 2 addiert. Das Trägersignal Lo wird in einem lokalen Oszillator 14 erzeugt und dem ersten Multiplizierglied 11 zugeführt. Über einen 90°-Phasenschieber 15 wird aus den Trägersignal Lo das in seiner Phase dazu orthogonale Trägersignal Lo* generiert, das dem zweiten Multiplizierglieder 12 zugeführt wird.

Das Ausgangssignal S des IQ-Modulators 2 wird auf einen Hochfrequenzverstärker 3 zur Verstärkung auf einen bestimmten Signalpegel gegeben. Der Hochfrequenzverstärker 3 wird im allgemeinen in seinem linearen Bereich betrieben, so dass nichtlineare Verzerrungen des Zwischenfrequenz- oder Hochfrequenzsignals S des IQ-Modulators 2 nicht auftreten. Das dem Hochfrequenzverstärker 3 nachfolgende Bandpaß-Filter 4 erzeugt aus dem Ausgangssignal $\overline{S}$ des Hochfrequenzverstärker 3 ein Zwischenfrequenz- oder Hochfrequenz-Bandpaß-Signal, das für eine Einseitenband-Übertragung eines der beiden Seitenbänder aus den Zwischenfrequenz- oder HochfrequenzSignal $\overline{S}$ herausfiltert. Schließlich wird über einen anschließenden Hochfrequenzdetektor 5 das Zwischenfrequenz- oder Hochfrequenz-Bandpaß-Signal $U_{DET}$ gemessen. Die Kennlinie des Hochfrequenzdetektors 5 sollte verfahrensbedingt eine streng monotone Kennlinie aufweisen. Im allgemeinen wird ein Hochfrequenzdetektor 5 mit einer quadratischen Kennlinie benutzt, wobei hierbei das Quadrat des Effektivwerts des an seinem Eingang anliegenden Zwischenfrequenz- oder Hochfrequenz-Bandpaß-Signals $\overline{S}$ ermittelt wird.

Neben dem in die Korrekturschaltung 1 eingeprägten Inphase-Modulationssignal I und dem Quadraturphase-Modulationssignal Q wird das vom Hochfrequenzdetektor 5 gemessene Zwischenfrequenz- oder Hochfrequenz-Bandpaß-Signal $U_{DET}$ der Verarbeitungseinheit 6 zugeführt. Jeweils fünf oder sieben Signalwerte des Inphase-Modulationssignals, des Quadraturphase-Modulationssignals und des Zwischenfrequenz- oder Hochfrequenz-Bandpaß-Signals $U_{DET}$ werden der Verarbeitungseinheit 6 für das erfindungsgemäße Verfahren zur gleichzeitigen Kompensation von in IQ-Modulatoren erzeugten Signalfehlern zur Bestimmung der jeweiligen Korrektursignale Gain_I, Gain_Q, Offset_I, Offset_Q und Quadratur zugeführt. Da es sich bei der Verarbeitungseinheit 6 um eine digital arbeitende Prozessor-Einheit handelt, werden die am Ausgang der Verarbeitungseinheit 6 digital anliegende Korrektursignale Gain_I, Gain_Q, Offset_I, Offset_Q und Quadratur über Digital- Analog-Wandler 16A, 16B, 16C, 16D und 16E in dazu korrespondierende Analogwerte umgesetzt, um sie der analog realisierten Korrekturschaltung 1 und dem analog realisierten IQ-Modulator 2 geeignet zuführen zu können. Entsprechend wird der Pegel des Hochfrequenz-Basisbandsignals $U_{DET}$ über einen Analog-Digital-Wandler 20 der Verarbeitungseinheit 6 zugeführt.

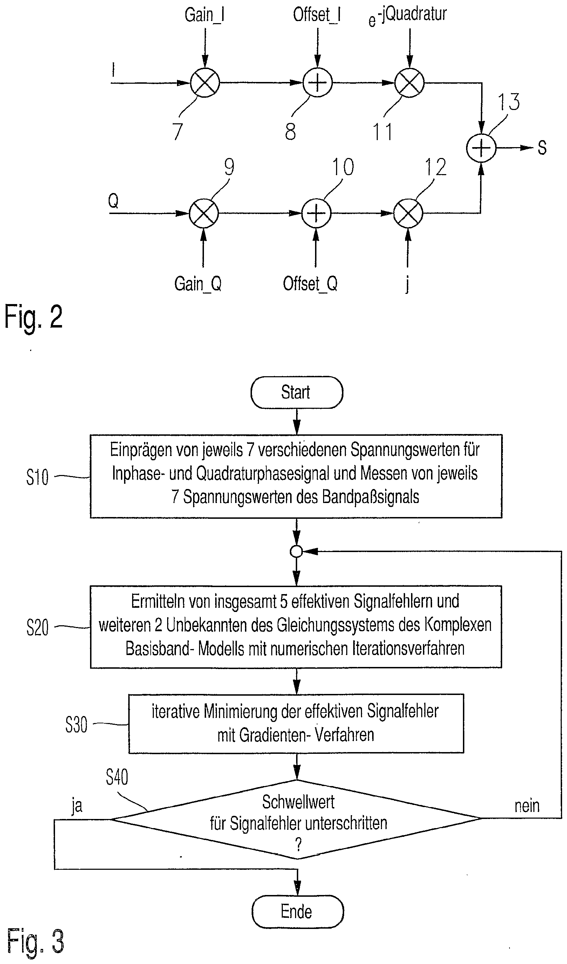

Zur Beschreibung des mathematischen Zusammenhangs zwischen eingeprägten Inphase- und Quadraturphase-Modulationssignalen I und Q, den einzelnen im IQ-Modulator 2 auftretenden Signalfehlern, den einzelnen Korrektursignalen und dem gemessenen Zwischenfrequenz- oder Hochfrequenz-Bandpaß-Signal S am Ausgang des IQ-Modulator 2 wird ein komplexes Basisband-Modell für die Übertragungsstrecke bestehend aus Korrekturschaltung 1 und IQ-Modulator 2 gemäß Fig. 2 konstruiert.

Für identische Merkmale des komplexen Basisband-Modells zum Blockschaltbild der aus Korrekturschaltung 1 und IQ-Modulator 2 bestehenden Übertragungsstecke werden gleiche Bezugszeichen verwendet.

Das Inphase-Modulationssignal I wird in einem ersten Verstärkungsglied 7 mit einem Korrektursignal Gain_I verstärkt, in einem nachfolgenden ersten Addierglied 8 zu einem Korrektursignal Offset_I addiert und in einem nachfolgenden ersten Multiplizierglied 11 mit dem komplexen Phasenglied $e^{-j*Quadratur}$ bestehend aus dem Korrektursignal Quadratur multipliziert. Analog wird das Quadraturphase-Modulationssignal Q in einem zweiten Verstärkungsglied 9 mit einem Korrektursignal Gain_Q verstärkt, in einem nachfolgende zweiten Addierglied 10 zu einem Korrektursignal Offset_Q addiert und in einem nachfolgende zweiten Multiplizierglied 12 mit der komplexen Größe j multipliziert. Die beiden Ausgangssignale des ersten und zweiten Multipliziergliedes 11 und 12 werden in einem nachfolgenden Addierer 13 zum komplexen Zwischenfrequenz- oder Hochfrequenz-Ausgangssignal S des IQ-Modulators 2 addiert.

Für das komplexe Zwischenfrequenz- oder Hochfrequenz-Ausgangssignal S des aus Korrekturschaltung 1 und IQ-Modulator 2 gebildeten komplexen Basisband-Modells nach Fig. 2 ergibt sich der mathematische Zusammenhang gemäß Gleichung (1).

$$S = (I * Gain\_I + Offset\_I)*e^{-jQuadratur} +$$
$$j*(Q * Gain\_Q + Offset\_Q) \qquad\qquad (1)$$

Der dem komplexen Basisband-Modell, bestehend aus Korrekturschaltung 1 und IQ-Modulator 2, nachfolgende Hochfrequenzverstärker 3 weist bei linearer Aussteuerung gemäß Gleichung (2) ein Übertragungsverhalten, das durch seinen Verstärkungsfaktor $V_{HF}$ bestimmt ist, auf. Das Ausgangssignal $\overline{S}$ des Hochfrequenzverstärkers 3 ergibt sich gemäß Gleichung (2):

$$\overline{S} = S * V_{HF} \qquad\qquad (2)$$

Das Übertragungsverhalten des Bandpaßfilters 4 ist im Bereich des Frequenzbandes annähernd konstant und wird mit einem Verstärkungsfaktor von näherungsweise 1 modelliert.

Die Kennlinie des Hochfrequenzdetektor 5 kann entweder durch Messung ermittelt werden oder besitzt einen mathematischen Funktionszusammenhang. Das Ausgangssignal $U_{DET}$ des Hochfrequenzdetektor 5 ergibt sich somit gemäß Gleichung (3):

$$U_{DET} = f(\overline{S}) \qquad\qquad (3)$$

Für den Sonderfall einer quadratischen Kennlinie, wie oben beschrieben, kann das Ausgangssignal $U_{DET}$ des Hochfrequenzdetektors 5 durch Gleichung (3) beschrieben werden, wobei die Kennlinie einen Verstärkungsfaktor $V_{DET}$ aufweist und mit einem Offsetfehler $O_{DET}$ behaftet ist.

$$U_{DET} = \left| V_{DET} * \overline{S} \right|^2 + O_{DET} \qquad (4)$$

Bei einem funktionalen Zusammenhang des Hochfrequenzdetektors 5 gemäß Gleichung (3) ergibt sich für das komplexe Zwischenfrequenz- oder Hochfrequenz-Bandpaß-Signal S ein mathematischer Zusammenhang gemäß Gleichung (5), wenn hierbei die Gleichung (2) und (3) in Gleichung (1) eingesetzt werden.

$$U_{DET} = f(((I * Gain\_I + Offset\_I) * e^{-jQuadratur} + j * (Q * Gain\_Q + Offset\_Q)) * V_{HF})$$

$$(5)$$

Werden die Korrektursignale Gain_I, Gain_Q, Offset_I und Offset_Q gemäß der Gleichungen (6a), (6b), (6c) und (6d) mit dem Verstärkungsfaktor $V_{HF}$ des Hochfrequenzverstärkers 3 zusammengefaßt, so ergibt sich gemäß Gleichung (7) eine nichtlineare Gleichung mit fünf Unbekannten.

$$G\_I = Gain\_I * V_{HF} \qquad (6a)$$

$$G\_Q = Gain\_Q * V_{HF} \qquad (6b)$$

$$O\_I = Offset\_I * V_{HF} \qquad (6c)$$

$$O\_Q = Offset\_Q * V_{HF} \qquad (6d)$$

$$U_{DET} = f((I * G\_I + O\_I) * e^{-jQuadratur} + j(Q * G\_Q + O\_Q)) \qquad (7)$$

Alternativ kann bei einem Hochfrequenzdetektor 5 mit quadratischer Kennlinie gemäß Gleichung (4) bei Zusammenfassung des Verstärkungsfaktors $V_{DET}$ des Hochfrequenzdetektors 5 und des Verstärkungsfaktors $V_{HF}$ des Hochfrequenzverstärker 3 gemäß Gleichung (8) und bei Einsetzen von Gleichung (1) und Gleichung (2) in Gleichung (4) ein mathematischer Zusammenhang für das komplexe Zwischenfrequenz- oder Hochfrequenz-Bandpaß-Signal $U_{DET}$ des Hochfrequenzdetektors (5) gemäß Gleichung (9) angegeben werden.

$$V = V_{HF} * V_{DET} \qquad (8)$$

$$U_{DET} = \left| V * ((I * Gain\_I + Offset\_I) * e^{-jQuadratur} + j(Q * Gain\_Q + Offset\_Q)) \right|^2 + O_{DET} \qquad (9)$$

Gleichung (9) stellt eine nichtlineare Gleichung mit sieben Unbekannten dar.

Wird die Korrekturschaltung 1 und der nachfolgende IQ-Modulator 2 an ihren beiden Eingängen mit einem Inphase-Modulationssignal I und einem Quadraturphase-Modulationssignal Q mit jeweils definierten Spannungspegel beaufschlagt und gleichzeitig über den Hochfrequenzdetektor 5 der Signalpegel des resultierenden Zwischenfrequenz- oder Hochfrequenz-Bandpaß-Signals $U_{DET}$ gemessen, so können die insgesamt fünf Unbekannten der Gleichung (7) bzw. die insgesamt sieben Unbekannten der Gleichung (9) dadurch ermittelt werden, daß dieser Vorgang insgesamt fünfmal bzw. siebenmal mit jeweils fünf bzw. sieben verschiedenen Signalpegeln des Inphase-Modulationssignals I, des Quadraturphase-Modulationssignal Q sowie des daraus resultierenden Zwischenfrequenz- oder Hochfrequenz-Bandpaß-Signals $U_{DET}$ durchgeführt wird. Aus einer einzigen Gleichung (7) oder (9) ergibt sich somit ein Gleichungssystem mit insgesamt fünf oder sieben Gleichungen, welche für die Bestimmung der insgesamt fünf oder sieben Unbekannten genutzt werden können.

Auf diese Weise ist ein Lösungsweg für das erfindungsgemäße Verfahren zur gleichzeitigen Kompensation von in IQ-Modulatoren erzeugten Signalfehlern gemäß Fig. 3, das im folgenden beschrieben wird, gegeben.

Im ersten Verfahrensschritt S10 des erfindungsgemäßen Verfahrens werden an den Eingängen des Inphase-Modulationssignals I und des Quadraturphase-Modulationssignals Q Spannungssignale mit definierten Signalpegel angelegt und der Signalpegel des resultierenden Zwischenfrequenz- oder Hochfrequenz-Bandpaß-Signals $U_{DET}$ am Ausgang des Hochfrequenzdetektor 5 ermittelt. Die Signalpegel des Inphase-Modulationssignals I und des Quadraturphase-Modulationssignals Q sind dabei so zu wählen, daß der Hochfrequenzdetektor 5 im Bereich seiner maximalen Steilheit betrieben wird. Auf diese Weise wird seine höchste Empfindlichkeit für die Messung ausgenutzt. Wenn zusätzlich die beiden Signalpegel des Inphase-Modulationssignals I und des Quadraturphase-Modulationssignals Q von einem Signalgenerator sehr genau eingestellt werden können, kann damit die Genauigkeit des erfindungsgemäßen Verfahrens optimiert werden. Dieser Vorgang wird in Verfahrensschritt S10 je nach verwendeter Kennlinie des Hochfrequenzdetektor 5 insgesamt fünfmal oder siebenmal zur Bestimmung der insgesamt fünf oder sieben Unbekannten wiederholt.

Mittels der in Verfahrensschritt S10 aufgeprägten und gemessenen Signalpegel des Inphase- und Quadraturphase-Modulationssignals I und Q und des gemessenen Zwischenfrequenz- oder Hochfrequenz-Bandpaß-Signals $U_{DET}$ wird das nichtlineare Gleichungssystem basierend auf Gleichung (7) oder Gleichung (9) in Verfahrensschritt S20 zur Bestimmung der insgesamt fünf oder sieben Unbekannten des Gleichungssystems gelöst. Hierbei handelt es sich um ein nichtlineares Gleichungssystem, das analytisch nicht lösbar ist. Deshalb wird ein numerisches Iterationsverfahren wie beispielsweise das bekannte Newton-Verfahren oder das Brodyn-Verfahren angewendet.

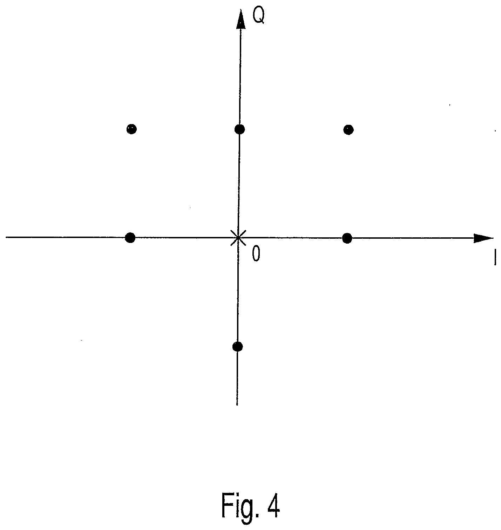

Als geeignete Startwerte der eingeprägten Signalpegel des Inphase- und Quadraturphase-Modulationssignals I und Q für das numerische Iterationsverfahren bieten sich die im Konstellationsdiagramm der Fig. 4 dargestellten Wertepaare an. Im Rahmen einer Fehleranalyse des numerischen Iterationsverfahrens für mehrere verschiedene Signalpegel-Sätze der optimale Signalpegel-Satz für die Startwerte des eingeprägten Inphase- und Quadraturphase-Modulationssignals I und Q ermittelt werden. Als Lösung des nichtlineare Gleichungssystems ergeben sich die insgesamt fünf oder sieben Unbekannten, in denen jeweils die fünf effektiven Signalfehler - Signalfehler mit additiver Wirkung auf das Inphase- und Quadraturphase-Modulationssignal, Signalfehler mit multiplikativer Wirkung auf das Inphase- und Quadraturphase-Modulationssignal, Signalfehler mit Wirkung auf die Phase der beiden Trägersignal - enthalten sind.

Die Minimierung jedes dieser effektiven Signalfehler erfolgt im darauffolgenden Verfahrensschritt S30. Hierbei wird das fünfdimensionale Minimum mit den fünf zu den jeweils fünf effektiven Signalfehlern gehörigen Minimas ermittelt. Festzustellen ist, daß die Minimumsuche in allen fünf Dimensionen eindeutig zu einem absoluten Minimum führt. Hierzu kommt ein iteratives Abstiegs-Gradienten-Verfahren zum Einsatz. Durch Verstellung der einzelnen Korrektursignale und damit der effektiven Signalfehler können mit einem Abstiegs-Gradienten-Verfahren in mehreren Iterationschritten die einzelnen effektiven Signalfehlern minimiert werden und damit die optimalen Signalwerte für die einzelnen Korrektursignale ermittelt werden. Hierzu erfolgt in Verfahrensschritt S40 für jeden im Verfahrensschritt S30 iterativ ermittelten effektiven Signalfehler ein Vergleich mit einem Schwellwert. Liegt der im vorherigen Verfahrensschritt S40 ermittelte effektive Signalfehler unterhalb des vorgegebenen Schwellwerts, so konvergiert das Abstiegs-Gradienten-Verfahren und der jeweils minimale effektive Signalfehler und der optimale Signalpegel des dazugehörigen Korrektursignals wird gefunden.

Im anderen Falle - kein Unterschreiten des jeweiligen effektiven Signalfehlers unter den vorgegebenen Schwellwert - ist in einem weiteren Iterationsschritt über das numerische Iterationsverfahren - z. B. Newton- oder Brodyn-Verfahren - der nächst niedrigere jeweilige effektive Signalfehler in Verfahrenschritt S20 zu ermitteln. Das iterative Berechnen eines neuen effektiven Signalfehlers mittels numerischen Newton- oder Brodyn-Verfahren in Verfahrensschritt S20 wird sooft fortgesetzt, bis alle effektiven Signalfehler in Verfahrensschritt S40 unterhalb ihres jeweils zugeordneten Schwellwerts liegen.

Die Erfindung ist nicht auf die dargestellte Ausführungsform beschränkt. Insbesondere sind andere numerische Verfahren zur Lösung des nichtlinearen Gleichungssystems und zur Minimierung der einzelnen effektiven Signalfehlern von der Erfindung abgedeckt. Auch ist im Hinblick auf die Minimierung der einzelnen effektiven Signalfehler eine Reglerstruktur - analoger Regler oder digital realisierter Regelalgorithmus -, welche in Rahmen ihrer Regeldifferenzminimierung die Minimerung der effektiven Signalfehler durchführt, von der Erfindung abgedeckt.

**Patentansprüche**

1.  Verfahren zur gleichzeitigen Kompensation mehrerer in einem IQ-Modulator (2) auftretender Signalfehler mit jeweils dazu inversen Korrektursignalen Gain_I, Gain_Q, Offset_I, Offset_Q und Quadratur, indem die optimierte Signalgröße jedes Korrektursignals Gain_I, Gain_Q, Offset_I, Offset_Q und Quadratur durch Bestimmung des Signalfehlers und anschliessende Minimierung des Signalfehlers iterativ ermittelt wird unter Verwendung der Gleichung $U_{DET}$ = $|V * ( ( I * Gain\_I + Offset\_I ) *e^{-jQuadratur} + + j (Q * Gain\_Q + Offset\_Q)) |^2 + O_{DET}$, wobei V den Verstärkungsfaktor eines Hochfrequenzdetektors und $O_{DET}$ dessen Offsetfehler repräsentieren und DET wobei eine Einprägung siebenmal mit sieben verschiedenen Signalpegeln des Inphase-Modulationssignals I, des Quadraturphase-Modulationssignal Q sowie mit dem daraus resultierenden Signal $U_{DET}$ durchgeführt wird.

2. Verfahren zur Kompensation nach Anspruch 1,
wobei das jeweilige Korrektursignal Gain_I, Gain_Q, Offset_I, Offset_Q, Quadratur in einer dem IQ-Modulator (2) vorgeschalteten Korrekturschaltung (1) einem Inphase-Modulationssignal I, einem Quadraturphase-Modulationssignal Q oder den beiden Trägersignal (Lo, Lo*) des IQ-Modulators (2) aufgeprägt wird.

3. Verfahren zur Kompensation nach Anspruch 2,
wobei ein erstes inverses Korrektursignal Offset_I mit optimierter Signalgröße zum Signalfehler, der dem Inphase-Modulationssignal I des IQ-Modulators (2) additiv überlagert ist, ein Signal mit einem zum Vorzeichen des Signalfehlers inversen Vorzeichen und einer zur Amplitude des Signalfehlers gleich großen Amplitude ist und zum Inphase-Modulationssignal I addiert wird.

4. Verfahren zur Kompensation nach Anspruch 2 oder 3,
wobei ein zweites inverses Korrektursignal Offset_Q mit optimierter Signalgröße zum Signalfehler, der dem Quadraturphase-Modulationssignal Q des IQ-Modulators (2) additiv überlagert ist, ein Signal mit einem zum Vorzeichen des Signalfehlers inversen Vorzeichen und einer zur Amplitude des Signalfehlers gleich großen Amplitude ist und zum Quadraturphase-Modulationssignal Q addiert wird.

5. Verfahren zur Kompensation nach einem der Ansprüche 2 bis 4,
wobei ein drittes inverses Korrektursignal Gain_I mit optimierter Signalgröße zum Signalfehler, der dem Inphase-Modulationssignal I des IQ-Modulators (2) multiplikativ überlagert ist, ein Signal mit einer zur Amplitude des Signalfehlers reziproken Amplitude ist und zum Inphase-Modulationssignal I multipliziert wird.

6. Verfahren zur Kompensation nach einem der Ansprüche 2 bis 5,
wobei ein viertes inverses Korrektursignal Gain_Q mit optimierter Signalgröße zum Signalfehler, der dem Quadraturphase-Modulationssignal Q des IQ-Modulators (2) multiplikativ überlagert ist, ein Signal mit einer zur Amplitude des Signalfehlers reziproken Amplitude ist und zum Quadraturphase-Modulationssignal Q multipliziert wird.

7. Verfahren zur Kompensation nach einem der Ansprüche 2 bis 6,
wobei ein fünftes inverses Korrektursignal Quadratur mit optimierter Signalgröße zum Signalfehler, der eine Phasenabweichung in der Orthogonalität der beiden Trägersignale (Lo, Lo*) verursacht, ein zur Phasenabweichung negatives Phasensignals ist und einem Phasenschieber (15) zur Einstellung der Orthogonalität der beiden Trägersignale (Lo, Lo*) zugeführt wird.

8. Verfahren zur Kompensation nach einem der Ansprüche 1 bis 7,
wobei jeder Signalfehler mit Hilfe eines komplexen Basisband-Modells des Übertragungsverhaltens zwischen dem Ausgang (17) und den beiden Eingängen (18, 19) des IQ-Modulators (2) und der vorgeschalteten Korrekturschaltung (1) ermittelt wird.

9. Verfahren zur Kompensation nach Anspruch 8,
wobei das komplexe Basisband-Modell die obige Gleichung mit einer Ordnung entsprechend der Anzahl der in der Gleichung enthaltenen Unbekannten ist und eine der Anzahl der in der Gleichung enthaltenen Unbekannten entsprechende Anzahl von an den beiden Eingängen (18, 19) jeweils eingeprägten Signalwerten des Inphase-Modulationssignals I und des Quadraturphase-Modulationssignals Q und von am Ausgang (17) des IQ-Modulators (2) gemessenen Zwischen- oder Hochfrequenz-Bandpaß-Signal $U_{DET}$ enthält.

10. Verfahren zur Kompensation nach Anspruch 9,
wobei das komplexe Basisband-Modell das Übertragungsverhalten eines dem IQ-Modulator (2) nachgeschalteten Hochfrequenzverstärkers (3), Bandpaßfilters (4) und Hochfrequenzdetektors (5) enthält.

11. Verfahren zur Kompensation nach Anspruch 1,

wobei die Gleichung mit dem Newton-Verfahren oder dem Brodyn-Verfahren gelöst wird.

12. Verfahren zur Kompensation nach einem der Ansprüche 1 bis 11,
wobei mittels des Verfahrens soweit iterativ minimiert wird, bis ein vorgegebener Schwellwert unterschritten ist.

13. Korrekturvorrichtung mit einer Korrekturschaltung (1) aus mehreren Korrekturgliedern (7, 8, 9, 10) zur Kompensation von in einem IQ-Modulator (2) auftretenden Signalfehlern und einer Verarbeitungseinheit (6) zur Bestimmung jedes zum jeweiligen Korrekturglied (7, 8, 9, 10, 15) gehörigen Korrektursignals Gain_I, Gain_Q, Offset_I, Offset_Q und Quadratur aus Meß- und Stellsignalen,
wobei die Stellsignale das an einem der beiden Eingänge (18) des IQ-Modulators (2) jeweils eingeprägte Inphase-Modulationssignal I und das am anderen der beiden Eingänge (19) des IQ-Modulators (2) eingeprägte Quadraturphase-Modulationssignal Q und das Meßsignal das am Ausgang (17) des IQ-Modulators (2) gemessene Zwischen- oder Hochfrequenz-Bandpaß-Signal $U_{DET}$ sind,
wobei die Gleichung $U_{DET} = |V * ( (I * Gain\_I + Offset\_I)* *e^{-jQuadratur} + j (Q * Gain\_Q + Offset\_Q) ) |^2 + O_{DET}$ gelöst wird, indem die Korrekturschaltung (1) und der nachfolgende IQ-Modulator (2) an ihren beiden Eingängen mit einem Inphase-Modulationssignal I und einem Quadraturphase-Modulationssignal Q mit jeweils definierten Spannungspegeln beaufschlagt und gleichzeitig über einen Hochfrequenzdetektor (5) der Signalpegel des resultierenden Zwischenfrequenz- oder Hochfrequenz-Bandpaß-Signals $U_{DET}$ gemessen wird und
wobei dieser Vorgang siebenmal mit sieben verschiedenen Signalpegeln des Inphase-Modulationssignals I, des Quadraturphase-Modulationssignal Q sowie mit dem daraus resultierenden Signal $U_{DET}$ durchgeführt wird, wobei V den Verstärkungsfaktor des Hochfrequenzdetektors und $O_{DET}$ dessen Offsetsfehler repräsentieren.

14. Korrekturvorrichtung nach Anspruch 13,
wobei das Zwischen- oder Hochfrequenz-Bandpaßsignal $U_{DET}$ am Ausgang (17) des IQ-Modulators (2) mit einem Hochfrequenzdetektor (5) gemessen wird.

15. Korrekturvorrichtung nach Anspruch 14,
wobei der Hochfrequenzdetektor (5) eine quadratische Kennlinie aufweist.

16. Korrekturvorrichtung nach einem der Ansprüche 13 bis 15,
wobei die Korrekturschaltung (1) dem IQ-Modulator (2) vorgeschaltet ist.

17. Korrekturvorrichtung nach Anspruch 16,
wobei die Korrekturglieder (7, 8, 9, 10, 15) der Korrekturschaltung (2) jeweils ein Addierglied (8, 10) zur Addition des Inphase-Modulationssignals I und des Quadraturphase-Modulationssignals Q mit dem jeweiligen Korrektursignal Offset_I, Offset_Q, jeweils ein Verstärkungs- oder Dämpfungsglied (7, 9) zur Verstärkung oder Dämpfung des Inphase-Modulationssignals I und des Quadraturphase-Modulationssignals Q mit dem jeweiligen Korrektursignal Gain_I, Gain_Q und ein Phasenschieber (15) zur Verschiebung der Phase der beiden zueinander orthogonalen Trägersignale (Lo, Lo*) des IQ-Modulators (2) mit dem jeweiligen Korrektursignal Quadratur sind.

**Claims**

1. Method for simultaneous compensation of several signal errors occurring in an IQ modulator (2) with correction signals Gain_I, Gain_Q, Offset_I, Offset_Q and Quadrature respectively inverse to them, in that the optimised signal value of each correction signal Gain_I, Gain_Q, Offset_I, Offset_Q and Quadrature is determined iteratively by determining the signal error and subsequent minimisation of the signal error using the equation $U_{DET} = |V * ((I * Gain\_I + Offset\_I)*e^{-jQuadrature} + j (Q * Gain\_Q + Offset\_Q)) |^2 + O_{DET}$, wherein V represents the gain factor of a high-frequency detector and $O_{DET}$ represents the offset error thereof, and wherein seven different signal levels of the in-phase modulation signal I and of the quadrature-phase modulation signal Q and the resulting signal $U_{DET}$ are impressed seven times.

2. Method for compensation according to claim 1,
wherein the respective correction signal Gain_I, Gain_Q, Offset_I, Offset_Q, Quadrature is impressed on an in-phase modulation signal I, a quadrature-phase modulation signal Q or on the two carrier signals (Lo, Lo*) of the IQ modulator (2) in a correction circuit (1) connected upstream of the IQ modulator (2).

3. Method for compensation according to claim 2,

wherein a first inverse correction signal Offset_I with signal value optimised to the signal error, which is additively superimposed over the in-phase modulation signal I of the IQ modulator (2) is a signal with a sign inverse to the sign of the signal error and an amplitude of the same magnitude as the amplitude of the signal error, and is added to the in-phase modulation signal I.

4. Method for compensation according to claim 2 or 3, wherein a second inverse correction signal Offset_Q with signal value optimised to the signal error, which is additively superimposed over the quadrature-phase modulation signal Q of the IQ modulator (2), is a signal with a sign inverse to the sign of the signal error and an amplitude of the same magnitude as the amplitude of the signal error, and is added to the quadrature-phase modulation signal Q.

5. Method for compensation according to any one of claims 2 to 4, wherein a third inverse correction signal Gain_I with signal value optimised to the signal error, which is multiplicatively superimposed over the in-phase modulation signal I of the IQ modulator (2), is a signal with an amplitude reciprocal to the amplitude of the signal error and is multiplied by the in-phase modulation signal I.

6. Method for compensation according to any one of claims 2 to 5, wherein a fourth inverse correction signal Gain_Q with signal value optimised to the signal error, which is superimposed multiplicatively over the quadrature-phase modulation signal Q of the IQ modulator (2), is a signal with an amplitude reciprocal to the amplitude of the signal error and is multiplied by the quadrature-phase modulation signal Q.

7. Method for compensation according to any one of claims 2 to 6, wherein a fifth inverse correction signal Quadrature with signal value optimised to the signal error, which causes a phase difference in the orthogonality of the two carrier signals (Lo, Lo*), is a phase signal negative to the phase difference and is supplied to a phase modifier (15) in order to adjust the orthogonality of the two carrier signals (Lo, Lo*).

8. Method for compensation according to any one of claims 1 to 7, wherein every signal error is determined using a complex baseband model of the transmission behaviour between the output (17) and the two inputs (18, 19) of the IQ modulator (2) and of the correction circuit (1) connected upstream.

9. Method for compensation according to claim 8, wherein the complex baseband model is the above equation with an order corresponding to the number of unknowns contained in the equation and contains a number, corresponding to the number of unknowns contained in the equation, of signal values, impressed respectively at the two inputs (18, 19), for the in-phase modulation signal I, the quadrature-phase modulation signal Q and the intermediate-frequency or high-frequency bandpass signal $U_{DET}$ measured at the output (17) of the IQ modulator (2).

10. Method for compensation according to claim 9, wherein the complex baseband model contains the transmission behaviour of a high-frequency amplifier (3), bandpass filter (4) and high-frequency detector (5) connected downstream of the IQ modulator (2).

11. Method for compensation according to claim 1, wherein the equation is solved with the Newton method or the Brodyn method.

12. Method for compensation according to any one of claims 1 to 11, wherein minimisation is carried out iteratively by means of the method until a predetermined threshold value is undershot.

13. Correction device with a correction circuit (1) comprising several correction elements (7, 8, 9, 10) for the compensation of signal errors occurring in an IQ modulator (2) and with a processor unit (6) for determining each correction signal Gain_I, Gain_Q, Offset_I, Offset_Q and Quadrature associated with the respective correction element (7, 8, 9, 10, 15) from measurement signals and adjustment signals, wherein the adjustment signals are the in-phase modulation signal I impressed respectively at one of the two inputs (18) of the IQ modulator (2) and the quadrature-phase modulation signal Q impressed at the other of the two inputs (19) of the IQ modulator (2), and the measurement signal is the intermediate-frequency or high-frequency bandpass signal $U_{DET}$ measured at the output (17) of the IQ modulator (2) wherein the equation $U_{DET} = |V * ((I * Gain\_I + Offset\_I)^{*e-jQuadrature} + j (Q * Gain\_Q + Offset\_Q))|^2 + O_{DET}$ is solved by applying an in-phase modulation signal I and a quadrature-phase modulation signal Q each with defined voltage levels to the two inputs of the correction circuit (1) and the downstream IQ modulator (2) and simultaneously measuring the signal level of the resulting intermediate-frequency or high-frequency bandpass signal $U_{DET}$ using a high-frequency detector (5), and wherein this operation is carried out seven times with seven different signal levels of the in-phase modulation signal I and of the quadrature-phase modulation signal Q and with the resulting signal $U_{DET}$, wherein V represents the gain factor of the high-frequency detector and $O_{DET}$ represents the offset error thereof.

14. Correction device according to claim 13,
wherein the intermediate-frequency or high-frequency bandpass signal $U_{DET}$ is measured at the output (17) of the IQ modulator (2) with a high-frequency detector (5).

15. Correction device according to claim 14,
wherein the high-frequency detector (5) has a quadratic characteristic.

16. Correction device according to any one of claims 13 to 15,
wherein the correction circuit (1) is connected upstream of the IQ modulator (2).

17. Correction device according to claim 16,
wherein the correction elements (7, 8, 9, 10, 15) of the correction circuit (2) are respectively an adding element (8, 10) for the addition of the in-phase modulation signal I and the quadrature-phase modulation signal Q to the respective correction signal Offset_I, Offset_Q, respectively an amplification or attenuation element (7, 9) for the amplification or attenuation of the in-phase modulation signal I and of the quadrature-phase modulation signal Q with the respective correction signal Gain_I, Gain_Q and a phase modifier (15) for adjusting the phase of the two mutually-orthogonal carrier signals (Lo, Lo*) of the IQ modulator (2) with the respective correction signal Quadrature.

## Revendications

1. Procédé de compensation simultanée de plusieurs erreurs de signal survenant dans un modulateur IQ (2) avec des signaux de correction respectivement inverses Gain_I, Gain_Q, Offset_I, Offset_Q et Quadrature, dans lequel la grandeur de signal optimisée de chaque signal de correction Gain_I, Gain_Q, Offset_I, Offset_Q et Quadrature est déterminée itérativement par détermination de l'erreur de signal et minimisation consécutive de l'erreur de signal en appliquant l'équation $U_{DET} = | V * ( (I * Gain\_I + Offset\_I)^{*e-jQuadrature} + + j (Q * Gain\_Q + Offset\_Q) ) |^2 + O_{DET}$, dans laquelle V représente le facteur d'amplification d'un détecteur haute fréquence et $O_{DET}$ son erreur de décalage, et dans lequel une injection est exécutée sept fois avec sept niveaux de signal différents du signal de modulation en phase I, du signal de modulation en quadrature de phase Q, et avec le signal $U_{DET}$ en résultant.

2. Procédé de compensation selon la revendication 1, dans lequel le signal de correction respectif Gain_I, Gain_Q, Offset_I, Offset_Q, Quadrature dans un circuit de correction (1) en amont du modulateur IQ (2) est appliqué à un signal de modulation en phase I, à un signal de modulation en quadrature de phase Q ou au deux signaux porteurs (Lo, Lo*) du modulateur IQ (2).

3. Procédé de compensation selon la revendication 2, dans lequel un premier signal de correction Offset_I à grandeur de signal optimisée inverse par rapport à l'erreur de signal superposée additivement au signal de modulation en phase I du modulateur IQ (2), est un signal avec un signe inverse au signe de l'erreur de signal et une amplitude égale à l'amplitude de l'erreur de signal, et est ajouté au signal de modulation en phase I.

4. Procédé de compensation selon la revendication 2 ou la revendication 3,
dans lequel un deuxième signal de correction Offset_Q à grandeur de signal optimisée inverse par rapport à l'erreur de signal superposée additivement au signal de modulation en quadrature de phase Q du modulateur IQ (2), est un signal avec un signe inverse au signe de l'erreur de signal et une amplitude égale à l'amplitude de l'erreur de signal, et est ajouté au signal de modulation en phase Q.

5. Procédé de compensation selon l'une des revendications 2 à 4,
dans lequel un troisième signal de correction Gain_I à grandeur de signal optimisée inverse par rapport à l'erreur de signal superposée multiplicativement au signal de modulation en phase I du modulateur IQ (2), est un signal avec une amplitude réciproque par rapport à l'amplitude de l'erreur de signal, et est multiplié au signal de modulation en phase I.

**6.** Procédé de compensation selon l'une des revendications 2 à 5,
dans lequel un quatrième signal de correction Gain_Q à grandeur de signal optimisée inverse par rapport à l'erreur de signal superposée multiplicativement au signal de modulation en quadrature de phase Q du modulateur IQ (2), est un signal avec une amplitude réciproque par rapport à l'amplitude de l'erreur de signal, et est multiplié au signal de modulation en quadrature de phase Q.

**7.** Procédé de compensation selon l'une des revendications 2 à 6,
dans lequel un cinquième signal de correction Quadrature à grandeur de signal optimisée inverse par rapport à l'erreur de signal à l'origine d'un écart de phase dans l'orthogonalité des deux signaux porteurs (Lo, Lo*), est un signal de phase négatif par rapport à l'écart de phase, et est acheminé vers un déphaseur (15) pour le réglage d'orthogonalité des deux signaux porteurs (Lo, Lo*).

**8.** Procédé de compensation selon l'une des revendications 1 à 7,
dans lequel chaque erreur de signal est déterminée au moyen d'un modèle de bande de base complexe du comportement de transmission entre la sortie (17) et les deux entrées (18, 19) du modulateur IQ (2) et le circuit de correction (1) en amont.

**9.** Procédé de compensation selon la revendication 8,
dans lequel le modèle de bande de base complexe est l'équation susmentionnée avec un ordre correspondant au nombre d'inconnues contenues dans l'équation, et contient un nombre, correspondant au nombre d'inconnues contenues dans l'équation, de valeurs du signal de modulation en phase I et du signal de modulation en quadrature de phase Q respectivement injectées aux deux entrées (18, 19), et de signal passe-bande de fréquence intermédiaire ou haute fréquence $U_{DET}$ mesuré à la sortie (17) du modulateur IQ (2).

**10.** Procédé de compensation selon la revendication 9,
dans lequel le modèle de bande de base complexe comprend le comportement de transmission d'un amplificateur haute-fréquence (3), filtre passe-bande (4) et détecteur haute fréquence (5) en aval du modulateur IQ (2).

**11.** Procédé de compensation selon la revendication 1,
dans lequel l'équation est résolue avec la méthode de Newton ou la méthode de Broyden.

**12.** Procédé de compensation selon l'une des revendications 1 à 11,
dans lequel une minimisation est effectuée de manière itérative au moyen dudit procédé, jusqu'à descendre sous une valeur seuil définie.

**13.** Dispositif de correction avec un circuit de correction (1) composé de plusieurs éléments de correction (7, 8, 9, 10) pour la compensation d'erreurs de signal survenant dans un modulateur IQ (2), et une unité de traitement (6) pour la détermination de chaque signal de correction Gain_I, Gain_Q, Offset_I, Offset_Q et Quadrature relevant de l'élément de correction (7, 8, 9, 10, 15) respectif à partir de signaux de mesure et de signaux de réglage,
dans lequel les signaux de réglage sont le signal de modulation en phase I respectivement injecté à une des deux entrées (18) du modulateur IQ (2) et le signal de modulation en quadrature de phase Q injecté à l'autre entrée (19) du modulateur IQ (2), et le signal de mesure est le signal passe-bande de fréquence intermédiaire ou haute fréquence $U_{DET}$ mesuré à la sortie (17) du modulateur IQ (2),
dans lequel l'équation $U_{DET} = |V * ((I * Gain\_I + Offset\_I) * e^{-jQuadrature} + j (Q * Gain\_Q + Offset\_Q) ) |^2 + O_{DET}$ est résolue en ce qu'un signal de modulation en phase I et un signal de modulation en quadrature de phase Q à niveaux de tension respectivement définis sont appliqués sur le circuit de correction (1) et le modulateur IQ (2) en aval à leurs deux entrées, et le niveau de signal du signal passe-bande de fréquence intermédiaire ou haute fréquence $U_{DET}$ est simultanément mesuré par un détecteur haute fréquence (5), et
dans lequel ce processus est exécuté sept fois avec sept niveaux de signal différents du signal de modulation en phase I, du signal de modulation en quadrature de phase Q, et avec le signal $U_{DET}$ en résultant, dans lequel V représente le facteur d'amplification du détecteur haute fréquence et $O_{DET}$ son erreur de décalage.

**14.** Dispositif de correction selon la revendication 13,
dans lequel le signal passe-bande de fréquence intermédiaire ou haute fréquence $U_{DET}$ est mesuré à la sortie (17) du modulateur IQ (2) par un détecteur haute fréquence (5).

**15.** Dispositif de correction selon la revendication 14,
dans lequel le détecteur haute fréquence (5) présente une courbe caractéristique carrée.

**16.** Dispositif de correction selon l'une des revendications 13 à 15,
dans lequel le circuit de correction (1) est en amont du modulateur IQ (2).

**17.** Dispositif de correction selon la revendication 16,
dans lequel les éléments de correction (7, 8, 9, 10, 15) du circuit de correction (2) sont respectivement un additionneur (8, 10) pour l'addition du signal de modulation en phase I et du signal de modulation en quadrature de phase Q au signal de correction Offset_I, Offset_Q, respectif, respectivement un élément amplificateur ou un élément atténuateur (7, 9) pour l'amplification ou l'atténuation du signal de modulation en phase I et du signal de modulation en quadrature de phase Q avec le signal de correction Gain_I, Gain_Q respectif, et un déphaseur (15) pour le décalage de la phase des signaux porteurs (Lo, Lo*) du modulateur IQ (2), orthogonaux l'un par rapport à l'autre, avec le signal de correction Quadrature respectif.

Fig. 1

Gain_I          Offset_I      e^{-j}Quadratur

I ——⊗—————⊕—————⊗————┐
   7        8       11     │
                          ⊕——→ S
                        13 │
Q ——⊗—————⊕—————⊗————┘
   9       10       12

Gain_Q          Offset_Q        j

## Fig. 2

**Start**

S10 — Einprägen von jeweils 7 verschiedenen Spannungswerten für Inphase- und Quadraturphasesignal und Messen von jeweils 7 Spannungswerten des Bandpaßsignals

S20 — Ermitteln von insgesamt 5 effektiven Signalfehlern und weiteren 2 Unbekannten des Gleichungssystems des Komplexen Basisband- Modells mit numerischen Iterationsverfahren

S30 — iterative Minimierung der effektiven Signalfehler mit Gradienten- Verfahren

S40 — Schwellwert für Signalfehler unterschritten ?  ja / nein

**Ende**

## Fig. 3

Fig. 4

**IN DER BESCHREIBUNG AUFGEFÜHRTE DOKUMENTE**

**In der Beschreibung aufgeführte Patentdokumente**

- DE 19934215 C1

**In der Beschreibung aufgeführte Nicht-Patentliteratur**

- An adaptive digital technique for compensating for analog quadrature modulator/demodulator impairments. **LOHTIA, A. et al.** COMMUNICATIONS, COMPUTERS AND SIGNAL PROCESSING; 1993; IEEE PACIFIC RIM CONFERENCE ON VICTORIA, BC, CANADA 19-21 MAY 1993. IEEE, 19. Mai 1993, vol. 2, 447-450